# EUROPEAN PATENT SPECIFICATION

(11) **EP 2 206 313 B1**
(45) Date of publication and mention of the grant of the patent: **31.10.2012**
(21) Application number: 08847648.6
(22) Date of filing: 07.11.2008
(51) Int. Cl.: H04L 29/06, H04L 29/08

(54) **METHOD, APPARATUS AND COMPUTER PROGRAM PRODUCT FOR PROVIDING DATA MANAGEMENT IN A P2P NETWORK**
VERFAHREN, VORRICHTUNG UND COMPUTERPROGRAMMPRODUKT ZUR BEREITSTELLUNG EINES DATENMANAGEMENTS IN EINEM P2P-NETZWERK
PROCÉDÉ, APPAREIL ET PRODUIT DE PROGRAMME INFORMATIQUE PERMETTANT D'AVOIR UNE GESTION DE DONNÉES DANS UN RÉSEAU P2P

(30) Priority: 09.11.2007 US 937666
(43) Date of publication of application: 14.07.2010
(73) Proprietor: Nokia Corporation, 02150 Espoo (FI)
(72) Inventor: MATUSZEWSKI, Marcin Wieslaw, 02-781 Warszawa (PL)
(74) Representative: Nokia Corporation
(86) International application number: PCT/IB2008/054676
(87) International publication number: WO 2009/060417

(56) References cited:
- US-A1- 2004 064 568
- GURBANI V K ET AL: "Cryptographically Transparent Session Initiation Protocol (SIP) Proxies" COMMUNICATIONS, 2007. ICC '07. IEEE INTERNATIONAL CONFERENCE ON, IEEE, PI, 1 June 2007 (2007-06-01), pages 1185-1190, XP031125834 ISBN: 978-1-4244-0353-0
- SHIM S NARAYANAN G DALEY PANASONIC E: "An Architecture for Peer-to-Peer Session Initiation Protocol (P2P SIP); draft-shim-sipping-p2p-arch-00.txt" IETF STANDARD-WORKING-DRAFT, INTERNET ENGINEERING TASK FORCE, IETF, CH, 26 February 2006 (2006-02-26), XP015044580 ISSN: 0000-0004

## Description

### TECHNOLOGICAL FIELD

Embodiments of the present invention relate generally to social network communication technology and, more particularly, relate to a method, apparatus and computer program product for providing data management in a peer-to-peer (P2P) network.

### BACKGROUND

The modem communications era has brought about a tremendous expansion of wireline and wireless networks. Computer networks, television networks, and telephony networks are experiencing an unprecedented technological expansion, fueled by consumer demand. Wireless and mobile networking technologies have addressed related consumer demands, while providing more flexibility and immediacy of information transfer.

Current and future networking technologies continue to facilitate ease of information transfer and convenience to users. One area in which there is a demand to increase the ease of information transfer and convenience to users relates to provision of information sharing in P2P networks. A P2P network is generally considered a network that relies primarily on the computing power and bandwidth of the devices (i.e., peers) within the network. Accordingly, P2P networks generally do not concentrate computing power and bandwidth within servers. Rather each of the peer devices is capable of simultaneously functioning as both a client and a server to other nodes of the P2P network. The architecture of P2P networks typically involves connecting nodes via largely *ad hoc* connections over which participant nodes can, for example, share content files containing audio, video, data or virtually anything in a digital format. Accordingly, data such as real time data or telephony traffic could be shared using P2P network.

Given the ubiquitous nature of mobile terminals, such as mobile phones and numerous other mobile electronic devices, P2P networks are becoming more common for sharing content between individuals in social groups or social networks. These social networks may center on a group of friends, relatives, co-workers, business associates, or people who share a common interest. Each individual (i.e., node) within a social network may invite other individuals to join. As such, although any particular node may generally communicate with a given group of other nodes within the social network, each of the other nodes may subsequently communicate with yet other nodes. Accordingly, within a social network, each node may be defined in terms of a degree of separation from each other node.

P2P networks can provide a mechanism for storing different types of data in a distributed way. In this regard, a distributed hash table (DHT) may define a structured overlay network architecture. A DHT architecture may be enabled to locate a particular piece of data stored in the overlay network using a limited number of messages, typically log(N) messages (N being a number of nodes in the network). Nodes of the overlay network are called peers, and each peer may have a unique peer ID (or node ID), which may be assigned when the peer joins the DHT. The DHT may be organized in a ring topology. Accordingly, the hash table's keyspace may be thought of as circular and peer IDs may be 128-bit unsigned integers representing position in the circular keyspace. Peer IDs are typically created by hashing the Internet Protocol (IP) address of the peer. Thus, if the IP address of the peer changes, the peer ID also changes.

Additionally, each peer may maintain a routing table (e.g., a finger table) that may be used to route messages to a designated destination. The routing (or finger) table may include a list of peers and the corresponding IP address of each of the peers (and/or other connectivity information) in the overlay network. In some embodiments, the number of peers in the list may be much smaller than the number of peers in the overlay. The routing table may therefore represent a collection of shortcuts to move throughout the DHT ring to reduce the number of hops needed to locate a particular resource in the network. Resources stored in the DHT may be indexed using corresponding data IDs, in which data IDs are distributed among DHT nodes. Each DHT node may store a subset of data IDs.

One problem that is common among P2P networks relates to security. In this regard, since messages and/or content may forwarded between multiple nodes in route to a particular destination, the messages and/or content may be rendered, and/or modified at intermediate nodes. In some commercial content sharing platforms, such a lack of security may be acceptable. However, other content sharing platforms may desire or require a higher level of security and/or privacy.

Accordingly, it may be desirable to provide a mechanism for improving network security in a P2P network, for example, by providing data management in a P2P network.

US 2004064568 Discusses presence detection using distributed indices in peer-to-peer networks. Peers may discover each other and be notified of new peers joining a session. "Cryptographically transparent Session Initiation Protocol (SIP) Proxies" (Gurbani et al,). Discusses creating an overlay network of secured p. allow secure traffic exchange between user agents.

### BRIEF SUMMARY

A method, apparatus and computer program product are therefore provided for providing data management in a P2P network. Thus, it may be possible to improve security/privacy levels in relation to P2P network content sharing. As such, for example, P2PSIP (P2P session initiation protocol) and other private content sharing platforms may prefer embodiments of the present invention for usage in environments capable of delivering higher levels of security/privacy.

In one exemplary embodiment, a method of providing data management in a P2P network is provided. The method includes communicating, from an originating node, information indicative of a user entry update to a destination node via at least one intermediate node, receiving a response to the communicated information via the at least one intermediate node, the response including contact information of the destination node, and establishing a secure communication channel directly between the originating node and the destination node using the contact information of the destination node.

In another exemplary embodiment, an apparatus for providing data management in a P2P network is provided. The apparatus may include a processor configured to communicate, from an originating node, information indicative of a user entry update to a destination node via at least one intermediate node, receive a response to the communicated information via the at least one intermediate node, the response including contact information of the destination node, and establish a secure communication channel directly between the originating node and the destination node using the contact information of the destination node.

In another exemplary embodiment, an apparatus for providing data management in a P2P network is provided. The apparatus includes means for communicating, from an originating node, information indicative of a user entry update to a destination node via at least one intermediate node, means for receiving a response to the communicated information via the at least one intermediate node, the response including contact information of the destination node, and means for establishing a secure communication channel directly between the originating node and the destination node using the contact information of the destination node.

In another exemplary embodiment, a method of providing data management in a P2P network is provided. The method includes receiving, from an originating node, information indicative of a user entry update at a destination node via at least one intermediate node, providing a response to the received information via the at least one intermediate node, the response including contact information of the destination node, and communicating directly between the originating node and the destination node via a secure communication channel established using the contact information of the destination node.

In yet another exemplary embodiment, an apparatus for providing data management in a P2P network is provided. The apparatus may include a processor configured to receive, from an originating node, information indicative of a user entry update at a destination node via at least one intermediate node, provide a response to the received information via the at least one intermediate node, the response including contact information of the destination node, and communicate directly between the originating node and the destination node via a secure communication channel established using the contact information of the destination node.

Embodiments of the present invention may be employed, for example, in mobile terminals or other nodes in order to provide improved content sharing capabilities between nodes in a P2P network.

### BRIEF DESCRIPTION OF THE SEVERAL VIEWS OF THE DRAWING(S)

Having thus described embodiments of the invention in general terms, reference will now be made to the accompanying drawings, which are not necessarily drawn to scale, and wherein:
FIG. 1 is a schematic block diagram of a mobile terminal according to an exemplary embodiment of the present invention;
FIG. 2 is a schematic block diagram of a wireless communications system according to an exemplary embodiment of the present invention;
FIG. 3 is a block diagram of an apparatus for providing data management in a P2P network according to an exemplary embodiment of the present invention;
FIG. 4 illustrates an example of a ring topology of a P2P network utilizing DHT according to an exemplary embodiment of the present invention;
FIG. 5 illustrates an example of a ring topology of a P2P network utilizing DHT with improved security according to an exemplary embodiment of the present invention; and
FIG. 6 is a flowchart according to an exemplary method of providing data management in a P2P network according to one embodiment of the present invention.

### DETAILED DESCRIPTION

Embodiments of the present invention will now be described more fully hereinafter with reference to the accompanying drawings, in which some, but not all embodiments of the invention are shown. Indeed, embodiments of the invention may be embodied in many different forms and should not be construed as limited to the embodiments set forth herein; rather, these embodiments are provided so that this disclosure will satisfy applicable legal requirements. Like reference numerals refer to like elements throughout.

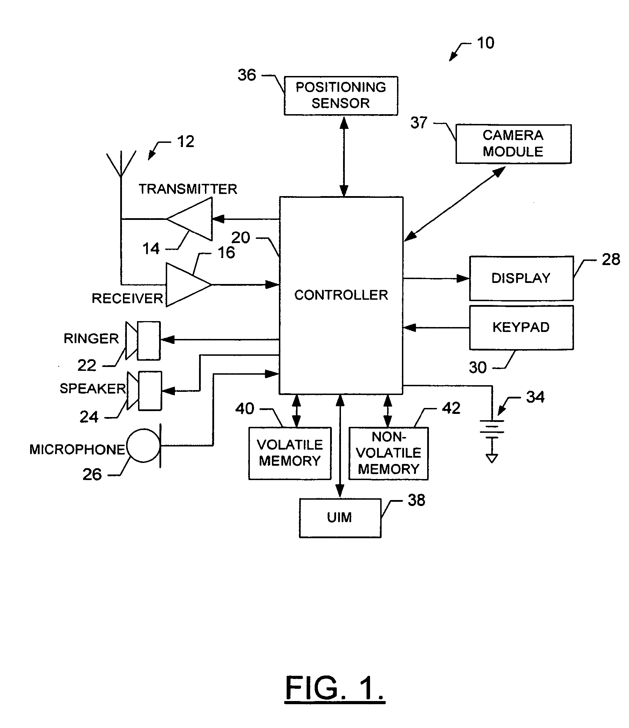

FIG. 1, one aspect of the invention, illustrates a block diagram of a mobile terminal 10 that would benefit from embodiments of the present invention. It should be understood, however, that a mobile telephone as illustrated and hereinafter described is merely illustrative of one type of mobile terminal that would benefit from embodiments of the present invention and, therefore, should not be taken to limit the scope of embodiments of the present invention. In particular, not all apparatuses that employ embodiments of the present invention may comprise all the features illustrated. While several embodiments of the mobile terminal 10 may be illustrated and hereinafter described for purposes of example, other types of mobile terminals, such as portable digital assistants (PDAs), pagers, mobile televisions, gaming devices, laptop computers, cameras, video recorders, audio/video player, radio, GPS devices, or any combination of the aforementioned, and other types of voice and text communications systems, can readily employ embodiments of the present invention. Furthermore, devices that are not mobile may also readily employ embodiments of the present invention.

In addition, while several embodiments of the method of the present invention are performed or used by a mobile terminal 10, the method may be employed by other than a mobile terminal. Moreover, the system and method of embodiments of the present invention will be primarily described in conjunction with mobile communications applications. It should be understood, however, that the system and method of embodiments of the present invention can be utilized in conjunction with a variety of other applications, both in the mobile communications industries and outside of the mobile communications industries.

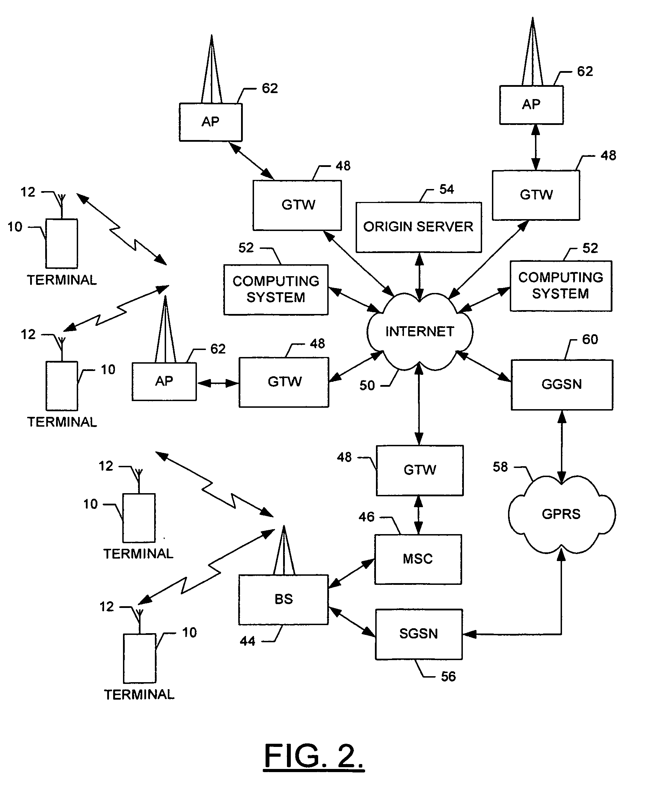

The mobile terminal 10 includes an antenna 12 (or multiple antennae) in operable communication with a transmitter 14 and a receiver 16. The mobile terminal 10 may further include an apparatus, such as a controller 20 or other processing element, that provides signals to and receives signals from the transmitter 14 and receiver 16, respectively. The signals include signaling information in accordance with the air interface standard of the applicable cellular system, and also user speech, received data and/or user generated data. In this regard, the mobile terminal 10 is capable of operating with one or more air interface standards, communication protocols, modulation types, and access types. By way of illustration, the mobile terminal 10 is capable of operating in accordance with any of a number of first, second, third and/or fourth-generation communication protocols or the like. For example, the mobile terminal 10 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA2000, wideband CDMA (WCDMA) and time division-synchronous CDMA (TD-SCDMA), with fourth-generation (4G) wireless communication protocols or the like. As an alternative (or additionally), the mobile terminal 10 may be capable of operating in accordance with non-cellular communication mechanisms. For example, the mobile terminal 10 may be capable of communication in a wireless local area network (WLAN) or other communication networks described below in connection with FIG. 2.

It is understood that the apparatus, such as the controller 20, may include circuitry desirable for implementing audio and logic functions of the mobile terminal 10. For example, the controller 20 may be comprised of a digital signal processor device, a microprocessor device, and various analog to digital converters, digital to analog converters, and other support circuits. Control and signal processing functions of the mobile terminal 10 are allocated between these devices according to their respective capabilities. The controller 20 thus may also include the functionality to convolutionally encode and interleave message and data prior to modulation and transmission. The controller 20 can additionally include an internal voice coder, and may include an internal data modem. Further, the controller 20 may include functionality to operate one or more software programs, which may be stored in memory. For example, the controller 20 may be capable of operating a connectivity program, such as a conventional Web browser. The connectivity program may then allow the mobile terminal 10 to transmit and receive Web content, such as location-based content and/or other web page content, according to a Wireless Application Protocol (WAP), Hypertext Transfer Protocol (HTTP) and/or the like, for example.

The mobile terminal 10 may also comprise a user interface including an output device such as a conventional earphone or speaker 24, a ringer 22, a microphone 26, a display 28, and a user input interface, all of which are coupled to the controller 20. The user input interface, which allows the mobile terminal 10 to receive data, may include any of a number of devices allowing the mobile terminal 10 to receive data, such as a keypad 30, a touch display (not shown) or other input device. In embodiments including the keypad 30, the keypad 30 may include the conventional numeric (0-9) and related keys (#, *), and other hard and soft keys used for operating the mobile terminal 10. Alternatively, the keypad 30 may include a conventional QWERTY keypad arrangement. The keypad 30 may also include various soft keys with associated functions. In addition, or alternatively, the mobile terminal 10 may include an interface device such as a joystick or other user input interface. The mobile terminal 10 further includes a battery 34, such as a vibrating battery pack, for powering various circuits that are required to operate the mobile terminal 10, as well as optionally providing mechanical vibration as a detectable output. In addition, the mobile terminal 10 may include a positioning sensor 36. The positioning sensor 36 may include, for example, a global positioning system (GPS) sensor, an assisted global positioning system (Assisted-GPS) sensor, etc. However, in one exemplary embodiment, the positioning sensor 36 includes a pedometer or inertial sensor. In this regard, the positioning sensor 36 is capable of determining a location of the mobile terminal 10, such as, for example, longitudinal and latitudinal directions of the mobile terminal 10, or a position relative to a reference point such as a destination or start point. Information from the positioning sensor 36 may then be communicated to a memory of the mobile terminal 10 or to another memory device to be stored as a position history or location information.

The mobile terminal 10 may further include a user identity module (UIM) 38. The UIM 38 is typically a memory device having a processor built in. The UIM 38 may include, for example, a subscriber identity module (SIM), a universal integrated circuit card (UICC), a universal subscriber identity module (USIM), a removable user identity module (R-UIM), etc. The UIM 38 typically stores information elements related to a mobile subscriber. In addition to the UIM 38, the mobile terminal 10 may be equipped with memory. For example, the mobile terminal 10 may include volatile memory 40, such as volatile Random Access Memory (RAM) including a cache area for the temporary storage of data. The mobile terminal 10 may also include other non-volatile memory 42, which can be embedded and/or may be removable. The non-volatile memory 42 can additionally or alternatively comprise an electrically erasable programmable read only memory (EEPROM), flash memory or the like, such as that available from the SanDisk Corporation of Sunnyvale, California, or Lexar Media Inc. of Fremont, California. The memories can store any of a number of pieces of information, and data, used by the mobile terminal 10 to implement the functions of the mobile terminal 10. For example, the memories can include an identifier, such as an international mobile equipment identification (IMEI) code, capable of uniquely identifying the mobile terminal 10. Furthermore, the memories may store instructions for determining cell id information. Specifically, the memories may store an application program for execution by the controller 20, which determines an identity of the current cell, i.e., cell id identity or cell id information, with which the mobile terminal 10 is in communication. In conjunction with the positioning sensor 36, the cell id information may be used to more accurately determine a location of the mobile terminal 10.

In an exemplary embodiment, the mobile terminal 10 includes a media capturing module, such as a camera, video and/or audio module, in communication with the controller 20. The media capturing module may be any means for capturing an image, video and/or audio for storage, display or transmission. For example, in an exemplary embodiment in which the media capturing module is a camera module 37, the camera module 37 may include a digital camera capable of forming a digital image file from a captured image, or a video file from a series of captured image frames with or without accompanying audio data. As such, the camera module 37 includes all hardware, such as a lens or other optical device, and software necessary for creating a digital image, video or audio file from captured image/audio data. Alternatively, the camera module 37 may include only the hardware needed to capture an image, while a memory device of the mobile terminal 10 stores instructions for execution by the controller 20 in the form of software necessary to create a digital image file from a captured image. In an exemplary embodiment, the camera module 37 may further include a processing element such as a co-processor which assists the controller 20 in processing image data and an encoder and/or decoder for compressing and/or decompressing image data. The encoder and/or decoder may encode and/or decode according to, for example, a joint photographic experts group (JPEG) standard or other format.

FIG. 2 is a schematic block diagram of a wireless communications system according to an exemplary embodiment of the present invention. Not all embodiments of the invention make use of systems comprising all the features illustrated Referring now to FIG. 2, an illustration of one type of system that would benefit from embodiments of the present invention is provided. The system includes a plurality of network devices. As shown, one or more mobile terminals 10 may each include an antenna 12 for transmitting signals to and for receiving signals from a base site or base station (BS) 44. The base station 44 may be a part of one or more cellular or mobile networks each of which includes elements required to operate the network, such as a mobile switching center (MSC) 46. As well known to those skilled in the art, the mobile network may also be referred to as a Base Station/MSC/Interworking function (BMI). In operation, the MSC 46 is capable of routing calls to and from the mobile terminal 10 when the mobile terminal 10 is making and receiving calls. The MSC 46 can also provide a connection to landline trunks when the mobile terminal 10 is involved in a call. In addition, the MSC 46 can be capable of controlling the forwarding of messages to and from the mobile terminal 10, and can also control the forwarding of messages for the mobile terminal 10 to and from a messaging center. It should be noted that although the MSC 46 is shown in the system of FIG. 2, the MSC 46 is merely an exemplary network device and embodiments of the present invention are not limited to use in a network employing an MSC.

The MSC 46 can be coupled to a data network, such as a local area network (LAN), a metropolitan area network (MAN), and/or a wide area network (WAN). The MSC 46 can be directly coupled to the data network. In one typical embodiment, however, the MSC 46 is coupled to a gateway device (GTW) 48, and the GTW 48 is coupled to a WAN, such as the Internet 50. In turn, devices such as processing elements (e.g., personal computers, server computers or the like) can be coupled to the mobile terminal 10 via the Internet 50. For example, as explained below, the processing elements can include one or more processing elements associated with a computing system 52 (two shown in FIG. 2), origin server 54 (one shown in FIG. 2) or the like, as described below.

The BS 44 can also be coupled to a serving GPRS (General Packet Radio Service) support node (SGSN) 56. As known to those skilled in the art, the SGSN 56 is typically capable of performing functions similar to the MSC 46 for packet switched services. The SGSN 56, like the MSC 46, can be coupled to a data network, such as the Internet 50. The SGSN 56 can be directly coupled to the data network. In a more typical embodiment, however, the SGSN 56 is coupled to a packet-switched core network, such as a GPRS core network 58. The packet-switched core network is then coupled to another GTW 48, such as a gateway GPRS support node (GGSN) 60, and the GGSN 60 is coupled to the Internet 50. In addition to the GGSN 60, the packet-switched core network can also be coupled to a GTW 48. Also, the GGSN 60 can be coupled to a messaging center. In this regard, the GGSN 60 and the SGSN 56, like the MSC 46, may be capable of controlling the forwarding of messages, such as MMS messages. The GGSN 60 and SGSN 56 may also be capable of controlling the forwarding of messages for the mobile terminal 10 to and from the messaging center.

In addition, by coupling the SGSN 56 to the GPRS core network 58 and the GGSN 60, devices such as a computing system 52 and/or origin server 54 may be coupled to the mobile terminal 10 via the Internet 50, SGSN 56 and GGSN 60. In this regard, devices such as the computing system 52 and/or origin server 54 may communicate with the mobile terminal 10 across the SGSN 56, GPRS core network 58 and the GGSN 60. By directly or indirectly connecting mobile terminals 10 and the other devices (e.g., computing system 52, origin server 54, etc.) to the Internet 50, the mobile terminals 10 may communicate with the other devices and with one another, such as according to the Hypertext Transfer Protocol (HTTP) and/or the like, to thereby carry out various functions of the mobile terminals 10.

Although not every element of every possible mobile network is shown and described herein, it should be appreciated that the mobile terminal 10 may be coupled to one or more of any of a number of different networks through the BS 44. In this regard, the network(s) may be capable of supporting communication in accordance with any one or more of a number of first-generation (1G), second-generation (2G), 2.5G, third-generation (3G), 3.9G, fourth-generation (4G) mobile communication protocols or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as a UMTS network employing WCDMA radio access technology. Some narrow-band analog mobile phone service (NAMPS), as well as total access communication system (TACS), network(s) may also benefit from embodiments of the present invention, as should dual or higher mode mobile stations (e.g., digital/analog or TDMA/CDMA/analog phones).

The mobile terminal 10 can further be coupled to one or more wireless access points (APs) 62. The APs 62 may comprise access points configured to communicate with the mobile terminal 10 in accordance with techniques such as, for example, radio frequency (RF), infrared (IrDA) or any of a number of different wireless networking techniques, including WLAN techniques such as IEEE 802.11 (e.g., 802.11a, 802.11b, 802.11g, 802.11n, etc.), world interoperability for microwave access (WiMAX) techniques such as IEEE 802.16, and/or wireless Personal Area Network (WPAN) techniques such as IEEE 802.15, BlueTooth (BT), ultra wideband (UWB) and/or the like. The APs 62 may be coupled to the Internet 50. Like with the MSC 46, the APs 62 can be directly coupled to the Internet 50. In one embodiment, however, the APs 62 are indirectly coupled to the Internet 50 via a GTW 48. Furthermore, in one embodiment, the BS 44 may be considered as another AP 62. As will be appreciated, by directly or indirectly connecting the mobile terminals 10 and the computing system 52, the origin server 54, and/or any of a number of other devices, to the Internet 50, the mobile terminals 10 can communicate with one another, the computing system, etc., to thereby carry out various functions of the mobile terminals 10, such as to transmit data, content or the like to, and/or receive content, data or the like from, the computing system 52. As used herein, the terms "data," "content," "information" and similar terms may be used interchangeably to refer to data capable of being transmitted, received and/or stored in accordance with embodiments of the present invention. Thus, use of any such terms should not be taken to limit the spirit and scope of embodiments of the present invention.

Although not shown in FIG. 2, in addition to or in lieu of coupling the mobile terminal 10 to computing systems 52 across the Internet 50, the mobile terminal 10 and computing system 52 may be coupled to one another and communicate in accordance with, for example, RF, BT, IrDA or any of a number of different wireline or wireless communication techniques, including LAN, WLAN, WiMAX, UWB techniques and/or the like. One or more of the computing systems 52 can additionally, or alternatively, include a removable memory capable of storing content, which can thereafter be transferred to the mobile terminal 10. Further, the mobile terminal 10 can be coupled to one or more electronic devices, such as printers, digital projectors and/or other multimedia capturing, producing and/or storing devices (e.g., other terminals). Like with the computing systems 52, the mobile terminal 10 may be configured to communicate with the portable electronic devices in accordance with techniques such as, for example, RF, BT, IrDA or any of a number of different wireline or wireless communication techniques, including universal serial bus (USB), LAN, WLAN, WiMAX, UWB techniques and/or the like.

In an exemplary embodiment, content or data may be communicated over the system of FIG. 2 between a mobile terminal, which may be similar to the mobile terminal 10 of FIG. 1, and a network device of the system of FIG. 2 in order to, for example, execute applications or establish communication (for example, for purposes of content sharing) between the mobile terminal 10 and other mobile terminals. As such, it should be understood that the system of FIG. 2 need not be employed for communication between mobile terminals or between a network device and the mobile terminal, but rather FIG. 2 is merely provided for purposes of example. Furthermore, it should be understood that embodiments of the present invention may be resident on a communication device such as the mobile terminal 10, and/or may be resident on a camera, server, personal computer or other device, absent any communication with the system of FIG. 2.

As described above, social networks may be formed via *ad hoc* connections between various nodes, which could be mobile terminals. Such connections may then be utilized to, for example, share access to content which could include video clips, text, audio data, photographs, etc. It should also be understood that accessing content could refer to accessing resources of a particular device. A common way to control access to content has been to provide access control lists (ACLs), which inform a particular device which permissions or access rights each user or group has to specific objects such as files or directories. The access control may be based on the identity of a corresponding user (e.g., usemame, user ID, etc) or the identity of a device (e.g., device name, media access control (MAC) address, Internet Protocol (IP) address, etc.). By utilizing relationships in social networks, other ways of controlling access to content may be implemented.

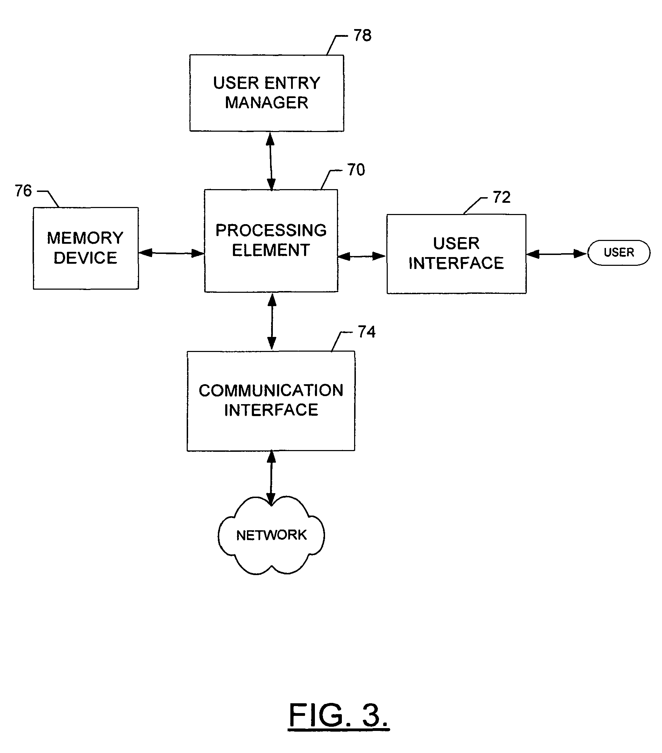

An exemplary embodiment of the invention will now be described with reference to FIG. 3, in which certain elements of an apparatus for enabling the provision of secure data management in a P2P network are displayed. The apparatus of FIG. 3 may be embodied as or otherwise employed, for example, on a device such as the mobile terminal of FIG. 1. However, it should be noted that the apparatus of FIG. 3, may also be employed on a variety of other devices, both mobile and fixed, and therefore, embodiments of the present invention should not be limited to application on devices such as mobile terminals. It should also be noted that while FIG. 3 illustrates one example of a configuration of an apparatus for enabling the provision of secure data management in a P2P network, numerous other configurations may also be used to implement embodiments of the present invention.

Referring now to FIG. 3, an apparatus for enabling the provision of secure data management in a P2P network is provided. The apparatus may include or otherwise be in communication with a processing element 70 (e.g., controller 20), a user interface 72, a communication interface 74 and a memory device 76. The memory device 76 may include, for example, volatile and/or non-volatile memory (e.g., volatile memory 40 and/or non-volatile memory 42). The memory device 76 may be configured to store information, data, applications, instructions or the like for enabling the apparatus to carry out various functions in accordance with exemplary embodiments of the present invention. For example, the memory device 76 could be configured to buffer input data for processing by the processing element 70. Additionally or alternatively, the memory device 76 could be configured to store instructions for execution by the processing element 70. As yet another alternative, the memory device 76 may be one of a plurality of databases that store information and/or media content.

The processing element 70 may be embodied in a number of different ways. For example, the processing element 70 may be embodied as a processor, a coprocessor, a controller or various other processing means or devices including integrated circuits such as, for example, an ASIC (application specific integrated circuit) or FPGA (field-programmable gate array) or combinations thereof. In an exemplary embodiment, the processing element 70 may be configured to execute instructions stored in the memory device 76 or otherwise accessible to the processing element 70. Meanwhile, the communication interface 74 may be embodied as any device or means embodied in either hardware, software, or a combination of hardware and software that is configured to receive and/or transmit data from/to a network and/or any other device or module in communication with the apparatus. In this regard, the communication interface 74 may include, for example, an antenna and supporting hardware and/or software for enabling communications with a wireless communication network.

The user interface 72 may be in communication with the processing element 70 to receive an indication of a user input at the user interface 72 and/or to provide an audible, visual, mechanical or other output to the user. As such, the user interface 72 may include, for example, a keyboard, a mouse, a joystick, a touch screen display, a conventional display, a microphone, a speaker, or other input/output mechanisms. In an exemplary embodiment in which the apparatus is embodied as a server, the user interface 72 may be limited, or eliminated. However, in an embodiment in which the apparatus is embodied as a mobile terminal (e.g., the mobile terminal 10), the user interface 72 may include, among other devices or elements, any or all of the speaker 24, the ringer 22, the microphone 26, the display 28, and the keyboard 30.

In an exemplary embodiment, the processing element 70 may be embodied as or otherwise control a user entry manager 78. The user entry manager 78 may be any means such as a device or circuitry embodied in hardware, software or a combination of hardware and software that is configured to perform the corresponding functions of the user entry manager 78. In this regard, a user entry may include, for example, user contact information and/or files, data or content the user would like to share with others. As such, the user entry manager 78 may be configured to enable the user (or the device associated with the user) to make information included in the user entry available to other users (e.g., nodes or peers) in a P2P network. Since the P2P network is a distributed network, making information available to others may involve updating a user entry by sending information to be shared from an originating node to a destination node where the information will be stored.

In a typical P2P network employing a DHT, PUT and GET messages may be used in the context of resource distribution. For example, a PUT message may be used to make a particular resource (e.g., content or information) available to others. Meanwhile, a GET message may be a request for a representation of a specified resource (e.g., a request for content or information made available for sharing). As such, PUT operations may insert information into a P2P overlay for sharing with others, while GET operations may enable retrieval of information previously made available via a PUT operation from a P2P network overlay. According to embodiments of the present invention, the user entry manager 78 may be configured to enable the generation of PUT and/or GET messages to provide a P2P node, such as the mobile terminal 10, to perform PUT and/or GET operations in accordance with embodiments of the present invention, one exemplary description of which is provided below. Furthermore, in the context of intermediate nodes, nodes storing information, and/or nodes ultimately requesting information, the user entry manager 78 of these nodes may further be configured to enable the nodes to forward PUT and/or GET messages and execute PUT and/or GET operations themselves. The user may utilize the user interface 76 to provide input to the user entry manager 78 with respect to identifying content or information for inclusion in a user entry and thereafter for selecting PUT and/or GET operations.

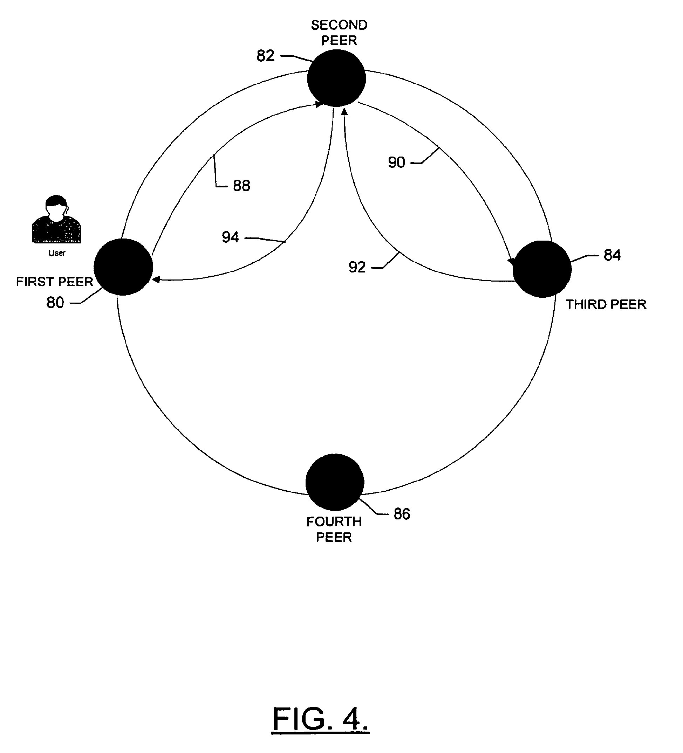

FIG. 4 illustrates an example of a ring topology of a P2P network utilizing DHT (e.g., a DHT network, distributed hash table network) according to an exemplary embodiment of the present invention. As shown in FIG. 4, a user may be associated with first node or peer 80. Other nodes including a second peer 82, a third peer 84 and a fourth peer 86 may also be included in the ring topology. It should be noted that FIG. 4 only shows a four peer DHT network, but more or less nodes could be included in a network operating in accordance with embodiments of the present invention. In fact, in some instances hundreds, thousands or even millions of nodes may be included in the DHT network. Accordingly, in larger networks, the number of nodes forwarding GET responses and/or PUT requests may be significantly larger, resulting in large amounts of data that may be transferred. However, although an embodiment of the present invention is described below in the context of a four peer network for the sake of simplicity, embodiments of the present invention may provide improvements that may be accentuated when applied in the context of even larger networks. Thus, FIG. 4 should be appreciated as being merely exemplary and not limiting with respect to the number of nodes included therein.

For a typical updating of a user entry, which will now be described in reference to FIG. 4, the user may utilize the user entry manager 78 to identify, for example, contact information and/or files, data or content to be designated as a resource for sharing via the DHT network. Accordingly, the user may utilize the user entry manager 78 to update the user entry in DHT. As indicated in FIG. 4, the first peer 80 may include or embed the identified resource (e.g., the contact information and/or files, data or content to be shared) in a PUT request 88, which may be addressed to a user ID (which may be equivalent to a data ID in a conventional DHT network). The PUT request 88 may then be sent to another peer (e.g., the second peer 82), for example, according to a routing algorithm. The PUT request 88 may then be forwarded to another peer (e.g., the third peer 84) that may be responsible for storing the corresponding user entry as indicated by forwarded PUT request 90. Of note, although only one forwarded PUT request is shown herein for the sake of simplicity, numerous forwards could be utilized in some networks. The third peer 84 may then update the corresponding user entry by storing the user entry (e.g., the information or content embedded in the PUT request 88) in response to receipt of the forwarded PUT request 90. The third peer 84 may send a response 92 to the first peer 80 to indicate confirmation and/or successful updating of the user entry. The response 92 may follow the reverse path that the PUT request 88 followed in transit to the third peer 84. In other words, the response 92 may be forwarded by the second peer 82 to the first peer 80 as indicated by forwarded response 94. The response 92 may also employ the same, or a similar, routing algorithm as was used by first peer 80 resulting in a non-identical, route back to the first peer 80 through the DHT.

When a peer or node of the network retrieves a user entry from the DHT, the peer may utilize similar message flow patterns as described above except that data would be transferred in the opposite direction (e.g., in response to a GET request). Transferring data through intermediate peers or nodes increases the load on P2P networks, which may be problematic or introduce challenges in mobile P2P networks due to the limited resources (e.g., CPU, memory, bandwidth, battery life, etc.) associated with mobile devices. Additionally, the probability that data will reach its destination reduces when PUT/GET messages carry large amounts of data due to forwarding and the distributed nature of DHT networks in mobile environments. Furthermore, badly behaving peers may listen to and/or modify messages that they forward. Accordingly, security may become an issue. However, in order to provide security for data being transmitted in a conventional PUT request, the entire path in DHT would have to be secured. In other words, encryption and/or other secure communication mechanisms would need to be in place between each of the nodes in the path, which would result in a large cost of maintaining the DHT in terms of network load for larger P2P networks.

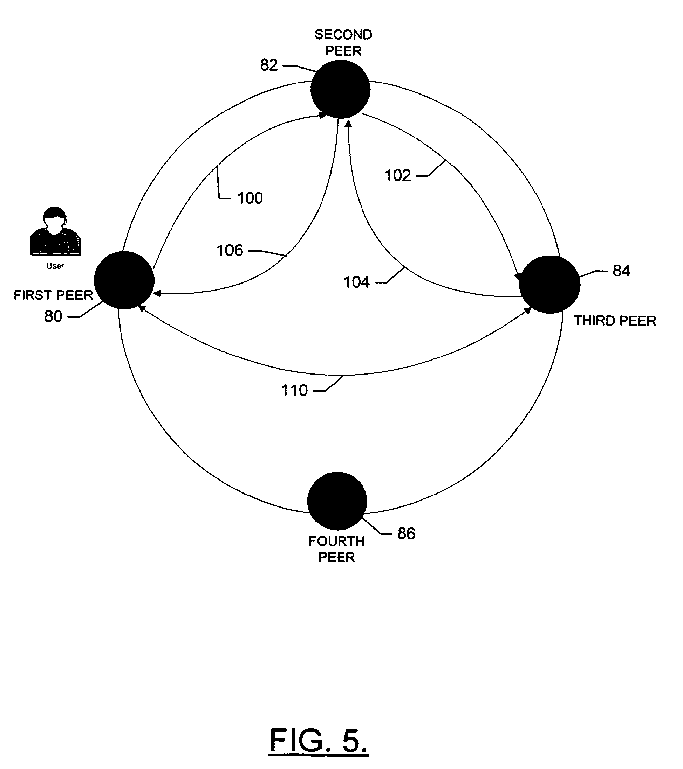

Accordingly, embodiments of the present invention may provide a mechanism to provide improved security with respect to the embodiment described above in reference to FIG. 4. In this regard, FIG. 5 illustrates an example of a ring topology of a P2P network utilizing DHT with improved security according to an exemplary embodiment of the present invention. In this regard, the embodiment of FIG. 5 is exemplary of a mechanism by which data transmission itself (e.g., the transmission of data to be stored at or accessed from a destination node) is decoupled from communications associated with searching of contact information (e.g., IP address/port number) of a peer responsible for storing user data. In other words, rather than sending the information that is ultimately to be stored at the destination node (or sending stored information being accessed) through a routing path including one or more intermediate nodes, embodiments of the present invention may provide for the routing of messages through intermediate nodes in order to enable the node providing new data for update (or requesting to view new or updated data) and the node storing the new data or updated data to identify each other and establish a secure connection between these two endpoints. The new data itself may then be communicated via the secure connection without need for the intermediate nodes to forward such data.

In accordance with the exemplary embodiment of FIG. 5, the user may utilize the user entry manager 78 to identify, for example, contact information and/or files, data or content to be designated as a resource for sharing via the DHT network in the form of a user entry. However, the user entry may not be included in a PUT request as was provided above in reference to FIG. 4. To the contrary, the user entry may not be communicated until a secure communication mechanism is established between the node providing the user entry and the node storing and/or updating the user entry.

Accordingly, as indicated in FIG. 5, the first peer 80 may create a GET CONTACT request, which may be addressed to a user ID of the user or peer having the data that will be updated. The contact information of the first peer 80 (i.e., the node or peer creating the GET CONTACT request) may be included in the GET CONTACT request. The GET CONTACT request may be included in a PUT CONTACT request 100 that may then be sent to another peer (e.g., the second peer 82), for example, according to a routing algorithm. The PUT CONTACT request 100 may then be forwarded to another peer (e.g., the third peer 84) that may be responsible for storing the corresponding user entry (when communicated later) in a forwarded PUT CONTACT request 102. The forwarded PUT CONTACT request 102 may be communicated, for example, to the third peer 84, which will ultimately store and/or update the user entry. The third peer 84 may receive the PUT CONTACT request 102 and extract or otherwise acquire the contact or address information (e.g., an IP address or port number) of the first peer 80 from the GET CONTACT request included therein. One way the contact information may be acquired is by DNS query, if it is not included in the PUT CONTACT message. The contact information may also be stored in a P2P DHT whence the third peer 84 may obtain the contact information using a normal GET operation. Using the acquired contact information of the first peer 80, the third peer 84 may send a response 104 to the first peer 80 following the reverse path that the GET CONTACT request followed in transit to the third peer 84. In other words, the response 104 may be communicated to the second peer 82 and thereafter forwarded by the second peer 82 to the first peer 80 as indicated by forwarded response 106. The response 104 may include contact or address information identifying the third peer 84 to the first peer 80. Accordingly, in response to receipt of the response to the GET CONTACT request (e.g., the forwarded response 106), the first peer 80 (e.g., via the user entry manager 78) may acquire the contact information of or identifying the third peer 84 and utilize the contact information of the third peer 84 to establish a secure connection 110 between the first peer 80 and the third peer 84. The data actually corresponding to the user entry being updated (e.g., the contact information and/or files, data or content the user would like to share with others) may then be communicated directly between the first peer 80 and the third peer 84 via the secure connection. The third peer 84 may also communicate confirmation of the update of the user entry after completion of the task, via the secure connection. Information needed to form the secure connection may reside in a P2P DHT, examples of such information being address of the third peer 84 and encryption keys of a public-key infrastructure. Such information may also be included in the forwarded response 106. In general, the response will allow the originating node to obtain information needed to form the secure connection, either directly from the response or by using information in the response.

In an exemplary embodiment, the secure connection may be a transport layer security (TLS) connection. In other words, TLS or a similar cryptographic protocol could be used to provide security with regard to communication only between endpoints of the communication chain involved in providing updating of a user entry in a P2P network employing DHT. Additionally, if a certificate used by peers in DHT includes user ID and peer ID, the same certificate may be used to sign the data being stored in the third peer 84 and authenticated in the first peer 80.

Accordingly, stated in another way, embodiments of the present invention may provide that the node originating the user entry (e.g., originating node) may communicate information indicating a desire to update the user entry to the destination node via intermediate node(s). The information may also identify the originating node to the destination node. Thereafter, the destination node may identify itself to the originating node (e.g., via communication through the intermediate node(s)) to enable the originating node to establish a secure communication channel directly with the destination node for communication of the user entry and confirmation with regard to updating/storing the user entry. In the context of the discussion above, the originating node should be understood to be a peer or node that is updating a user entry by providing contact information and/or files, data or content to be shared with others, and the destination node should be understood to be a peer or node within the distributed network of a P2P network employing DHT that is assigned to store the resource corresponding to the user entry to be updated/stored. However, the originating node could also be a node originating a request to view content already stored at the destination node, but which may have been updated. Thus, the exchange of contact information described above may be used to setup the secure communication channel for communicating stored information at the destination node to the originating node.

Embodiments of the present invention may provide a reduction in the cost (e.g., in terms of resource consumption) of maintaining a DHT by reducing the load on DHT nodes since large amounts of data will not need forwarding as required during conventional PUT/GET operations. Additionally, security of content sharing may also be improved.

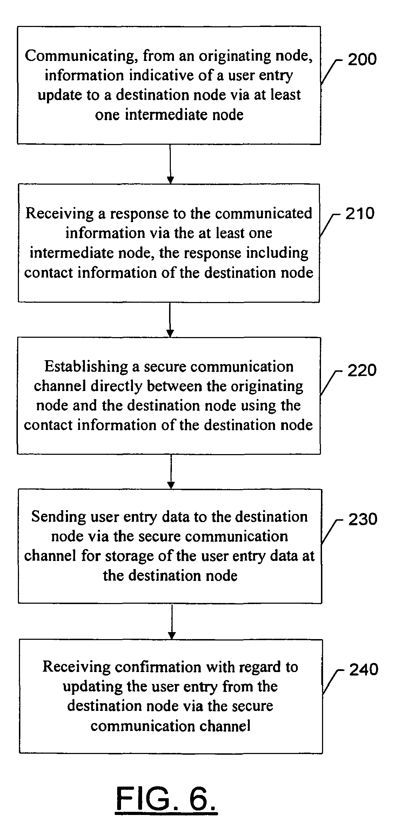

FIG. 6 is a flowchart of a system, method and program product according to exemplary embodiments of the invention. It will be understood that each block or step of the flowchart, and combinations of blocks in the flowchart, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory device of the mobile terminal and executed by a built-in processor in the mobile terminal. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

In this regard, one embodiment of a method of providing data management in a P2P network, as shown in FIG. 6, may include communicating, from an originating node, information indicative of a user entry update to a destination node via at least one intermediate node at operation 200. The method may further include receiving a response to the communicated information via the at least one intermediate node, the response including contact information of the destination node, at operation 210 and establishing a secure communication channel directly between the originating node and the destination node using the contact information of the destination node at operation 220.

In an exemplary embodiment, the method may further include additional operations. For example, the method may include sending user entry data to the destination node via the secure communication channel for storage of the user entry data at the destination node at operation 230 and receiving confirmation with regard to updating the user entry from the destination node via the secure communication channel at operation 240. In an exemplary embodiment, establishing the secure communication channel may include establishing a communication channel employing transport layer security (TLS). Additionally, the information communicated from the originating node may contact information of or identifying the originating node. In one embodiment, the information indicative of a user entry update may be indicative of a desire by the originating node to update the user entry. Alternatively, the information indicative of the user entry update may be an indication from the originating node of a desire to view an updated user entry. In an exemplary embodiment, second information needed to establish the secure connection may be obtained using first information included in the response.

Although the user entry updating functionality described above is described from the perspective of the originating node, embodiments of the present invention may also be practiced at the destination and intermediate nodes by supporting the functionality described above. As such, incorporating the updating functionality into the originating node is but one example of how embodiments of the present invention may be performed. Thus, FIG. 6 may also be considered as representative of operations that may occur at the destination node as well except that information communicated from the originating node is received at the destination node and information received at the originating node is communicated from the destination node.

Many modifications and other embodiments of the inventions set forth herein will come to mind to one skilled in the art to which these embodiments pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method comprising:
communicating, from an originating node, information indicative of a user entry update to a destination node via at least one intermediate node (200);
receiving a response to the communicated information via the at least one intermediate node, the response including contact information of the destination node (210); and
establishing a secure communication channel directly between the originating node and the destination node using the contact information of the destination node (220),
**characterized in that**
the secure communication channel does not comprise intermediate nodes.

2. A method according to Claim 1, further comprising sending user entry data to the destination node via the secure communication channel for storage of the user entry data at the destination node.

3. A method according to Claim 1, further comprising receiving confirmation with regard to updating the user entry from the destination node via the secure communication channel.

4. A method according to Claim 1, wherein establishing the secure communication channel comprises establishing a communication channel employing transport layer security (TLS).

5. A method according to Claim 1, wherein communicating the information comprises communicating contact information of the originating node.

6. A method according to Claim 1, further comprising obtaining second information needed to establish the secure connection, wherein the response comprises first information used in the obtaining of the second information.

7. An apparatus comprising:
means for communicating (74), from an originating node, information indicative of a user entry update to a destination node via at least one intermediate node;
means for receiving a response to the communicated information (74) via the at least one intermediate node, the response including contact information of the destination node; and
means for establishing a secure communication (70) channel directly between the originating node and the destination node using the contact information of the destination node,
**characterized in that**
the secure communication channel does not comprise intermediate nodes.

8. An apparatus according to Claim 7, wherein the apparatus is configured to send user entry data to the destination node via the secure communication channel for storage of the user entry data at the destination node.

9. An apparatus according to Claim 7, wherein the apparatus is configured to receive confirmation with regard to updating the user entry from the destination node via the secure communication channel.

10. An apparatus according to Claim 7, wherein the apparatus is configured to establish the secure communication channel employing transport layer security (TLS).

11. An apparatus according to Claim 7, wherein the apparatus is configured to contact information of the originating node in the information communicated from the originating node.

12. An apparatus according to Claim 7, wherein the apparatus is configured to obtain second information needed to establish the secure connection, wherein the response comprises first information used in the obtaining of the second information.

13. A computer program configured to cause a method according to any of claims 1-6 to be performed.

## Patentansprüche

1. Verfahren, umfassend:
Übertragen von Informationen, die eine Benutzerzugangsaktualisierung anzeigen, von einem Absendeknoten über mindestens einen Zwischenknoten (200) an einen Zielknoten;
Empfangen einer Antwort auf die Informationen, die über den mindestens einen Zwischenknoten übertragen wurden, wobei die Antwort Kontaktinformationen des Zielknotens (210) enthält; und
Herstellen eines sicheren Kommunikationskanals ummittelbar zwischen dem Absendeknoten und dem Zielknoten unter Verwendung der Kontaktinformationen des Zielknotens (220),
**dadurch gekennzeichnet, dass**
der sichere Kommunikationskanal keine Zwischenknoten enthält.

2. Verfahren nach Anspruch 1, ferner das Senden der Benutzerzugangsdaten an den Zielknoten über den sicheren Kommunikationskanal umfassend, um die Benutzerzugangsdaten am Zielknoten zu speichern.

3. Verfahren nach Anspruch 1, ferner den Empfang einer Bestätigung bezüglich der Aktualisierung des Benutzerzugangs vom Zielknoten über den sicheren Kommunikationskanal umfassend.

4. Verfahren nach Anspruch 1, wobei das Herstellen des sicheren Kommunikationskanals ein Herstellen eines Kommunikationskanals umfasst, der die Transport Layer Security (TLS) verwendet.

5. Verfahren nach Anspruch 1, wobei das Übertragen der Informationen ein Übertragen von Kontaktinformationen des Absendeknotens umfasst.

6. Verfahren nach Anspruch 1, ferner das Beschaffen von zweiten Informationen umfassend, die benötigt werden, um die sichere Verbindung herzustellen, wobei die Antwort die ersten Informationen umfasst, die beim Beschaffen der zweiten Informationen verwendet wurden.

7. Vorrichtung, umfassend:
Mittel zum Übertragen (74) von Informationen, die eine Benutzerzugangsaktualisierung anzeigen, von einem Absendeknoten über mindestens einen Zwischenknoten an einen Zielknoten;
Mittel zum Empfangen einer Antwort auf die Informationen (74), die über den mindestens einen Zwischenknoten übertragen wurden, wobei die Antwort Kontaktinformationen des Zielknotens enthält; und
Mittel zum Herstellen eines sicheren Kommunikationskanals (70) unmittelbar zwischen dem Absendeknoten und dem Zielknoten unter Verwendung der Kontaktinformationen des Zielknotens,
**dadurch gekennzeichnet, dass**
der sichere Kommunikationskanal keine Zwischenknoten enthält.

8. Vorrichtung nach Anspruch 7, wobei die Vorrichtung eingerichtet ist, Benutzerzugangsdaten an den Zielknoten über den sicheren Kommunikationskanal zu sendern, um die Benutzerzugangsdaten am Zielknoten zu speichern.

9. Vorrichtung nach Anspruch 7, wobei die Vorrichtung eingerichtet ist, eine Bestätigung bezüglich der Aktualisierung des Benutzerzugangs vom Zielknoten über den sicheren Kommunikationskanal zu empfangen.

10. Vorrichtung nach Anspruch 7, wobei die Vorrichtung eingerichtet ist, den sicheren Kommunikationskanal unter Verwendung der Transport Layer Security (TLS) herzustellen.

11. Vorrichtung nach Anspruch 7, wobei die Vorrichtung eingerichtet ist für die Kontaktinformationen des Absendeknotens in den Informationen, die vom Absendeknoten übertragen wurden.

12. Vorrichtung nach Anspruch 7, wobei die Vorrichtung eingerichtet ist, zweite Informationen zu beschaffen, die benötigt werden, um die sichere Verbindung herzustellen, wobei die Antwort die ersten Informationen umfasst, die beim Beschaffen der zweiten Informationen verwendet wurden.

13. Computerprogramm, das eingerichtet ist, das Ausführen eines Verfahrens nach einem der Ansprüche 1-6 zu veranlassen.

## Revendications

1. Procédé comprenant les étapes ci-dessous consistant à:
communiquer, à partir d'un noeud de départ, des informations indiquant une mise à jour d'entrée d'utilisateur, à un noeud de destination, par l'intermédiaire d'au moins un noeud intermédiaire (200) ;
recevoir une réponse aux informations communiquées par l'intermédiaire dudit au moins un noeud intermédiaire, la réponse comprenant des informations de contact du noeud de destination (210) ; et
établir un canal de communication sécurisé directement entre le noeud de départ et le noeud de destination en utilisant les informations de contact du noeud de destination (220) ;
**caractérisé en ce que**
le canal de communication sécurisé ne comprend pas de noeuds intermédiaires.

2. Procédé selon la revendication 1, comprenant en outre l'étape consistant à envoyer des données d'entrée d'utilisateur au noeud de destination via le canal de communication sécurisé, en vue du stockage des données d'entrée d'utilisateur au niveau du noeud de destination.

3. Procédé selon la revendication 1, comprenant en outre l'étape consistant à recevoir une confirmation relativement à la mise à jour de l'entrée d'utilisateur à partir du noeud de destination, par l'intermédiaire du canal de communication sécurisé.

4. Procédé selon la revendication 1, dans lequel l'étape d'établissement du canal de communication sécurisé consiste à établir un canal de communication en employant une sécurité de la couche de transport (TLS).

5. Procédé selon la revendication 1, dans lequel l'étape de communication des informations consiste à communiquer des informations de contact du noeud de départ.

6. Procédé selon la revendication 1, comprenant en outre l'étape consistant à obtenir des secondes informations nécessaires pour établir la connexion sécurisée, dans lequel la réponse comprend des premières informations utilisées dans l'obtention des secondes informations.

7. Dispositif comprenant :
un moyen pour communiquer (74), à partir d'un noeud de départ, des informations indiquant une mise à jour d'entrée d'utilisateur, à un noeud de destination, par l'intermédiaire d'au moins un noeud intermédiaire ;
un moyen pour recevoir une réponse aux informations communiquées (74) par l'intermédiaire dudit au moins un noeud intermédiaire, la réponse comprenant des informations de contact du noeud de destination ; et
un moyen pour établir un canal de communication sécurisé (70) directement entre le noeud de départ et le noeud de destination en utilisant les informations de contact du noeud de destination ;
**caractérisé en ce que**
le canal de communication sécurisé ne comprend pas de noeuds intermédiaires.

8. Dispositif selon la revendication 7, dans lequel le dispositif est configuré de manière à envoyer des données d'entrée d'utilisateur au noeud de destination via le canal de communication sécurisé, en vue du stockage des données d'entrée d'utilisateur au niveau du noeud de destination.

9. Dispositif selon la revendication 7, dans lequel le dispositif est configuré de manière à recevoir une confirmation relativement à la mise à jour de l'entrée d'utilisateur à partir du noeud de destination, par l'intermédiaire du canal de communication sécurisé.

10. Dispositif selon la revendication 7, dans lequel le dispositif est configuré de manière à établir le canal de communication sécurisé en employant une sécurité de la couche de transport (TLS).

11. Dispositif selon la revendication 7, dans lequel le dispositif est configuré de manière à communiquer des informations de contact du noeud de départ dans les informations communiquées à partir du noeud de départ.

12. Dispositif selon la revendication 7, dans lequel le dispositif est configuré de manière à obtenir des secondes informations nécessaires pour établir la connexion sécurisée, dans lequel la réponse comprend des premières informations utilisées dans l'obtention des secondes informations.

13. Programme informatique configuré de manière à amener un procédé selon l'une quelconque des revendications 1 à 6 à être mis en oeuvre.
